# EUROPEAN PATENT APPLICATION

(11) **EP 4 700 252 A1**
(43) Date of publication of application: **25.02.2026**
(21) Application number: 24883830.2
(22) Date of filing: 06.05.2024
(51) Int. Cl.: F16C 11/04

(54) **ROTATING APPARATUS AND FOLDABLE ELECTRONIC DEVICE**

(30) Priority: 30.10.2023 CN 202322927177 U
(71) Applicant: Huawei Technologies Co., Ltd., Shenzhen, Guangdong 518129 (CN)
(72) Inventor: YU, Weidong, Shenzhen, Guangdong 518129 (CN); MAO, Weihua, Shenzhen, Guangdong 518129 (CN); LV, Ren, Shenzhen, Guangdong 518129 (CN)
(74) Representative: Pfenning, Meinig & Partner mbB
(86) International application number: PCT/CN2024/091153
(87) International publication number: WO 2025/091817

(57) **Abstract**

Provided are a rotating apparatus and a foldable electronic device. The rotating apparatus includes a first connecting mechanism (100a). The first connecting mechanism includes a first connecting part (101). The first connecting part includes a first connecting component (110) and a second connecting component (120). A first end (111) of the first connecting component is configured to rotatively connect to a first part (11) of the foldable electronic device at which the rotating apparatus is located. A second end (112) of the first connecting component is rotatively connected to a first end (121) of the second connecting component, and a second end (122) of the second connecting component is configured to slidably connect to a second part (12) of the foldable electronic device. A weight of the second part is less than a weight of the first part. The first connecting component of the rotating apparatus is rotatively connected to the first part, so that limiting exerted by the rotating apparatus on the first part can be further enhanced, thereby effectively improving drop reliability of the foldable electronic device in an unfolded state.

## Description

### TECHNICAL FIELD

This application relates to the field of electronic product technologies, and in particular, to a rotating apparatus and a foldable electronic device.

### BACKGROUND

With development of flexible display technologies, flexible display-based foldable electronic devices, such as foldable mobile phones, are gaining increasing attention and popularity. Currently, a foldable electronic device usually includes a rotating apparatus, two housings, and a flexible display. The two housings are rotatively connected through the rotating apparatus, and the flexible display covers the rotating apparatus and the two housings. This allows the two housings to rotate relative to each other through the rotating apparatus, enabling free switching between an unfolded state and a folded state of the foldable electronic device. The folded state of the foldable electronic device may be further classified into an inward-folding screen form and an outward-folding screen form, to meet differentiated requirements of different users.

However, when the electronic device in the outward-folding screen form is dropped in the unfolded state, the two housings are subject to external impact, so that a gap at a joint between the two housings is reduced. Consequently, the flexible display disposed on the two housings bulges at the joint between the two housings, which is prone to a display malfunction of the flexible display. The foldable electronic device exhibits poor drop reliability in the unfolded state.

### SUMMARY

To resolve the foregoing technical problem, this application provides a rotating apparatus and a foldable electronic device. The following describes this application from a plurality of aspects. Mutual reference may be made to implementations and beneficial effects of the following plurality of aspects.

A first aspect of this application provides a rotating apparatus. The rotating apparatus includes a first connecting mechanism. The first connecting mechanism includes a first connecting part. The first connecting part includes a first connecting component and a second connecting component. A first end of the first connecting component is configured to rotatively connect to a first part of a foldable electronic device at which the rotating apparatus is located. A second end of the first connecting component is rotatively connected to a first end of the second connecting component, and a second end of the second connecting component is configured to slidably connect to a second part of the foldable electronic device.

According to the rotating apparatus, the first connecting component is rotatively connected to the first part, so that strength of limiting exerted by the rotating apparatus on the first part of the foldable electronic device can be effectively enhanced. This can further improve drop reliability of the foldable electronic device in an unfolded state.

In a possible implementation of the first aspect, a rotating axis of the first part is parallel to a first direction, and a sliding direction of the second part is perpendicular to the first direction.

In a possible implementation of the first aspect, the first connecting component includes a first connecting piece and a second connecting piece, where a first end of the first connecting piece is configured to rotatively connect to the first part, a second end of the first connecting piece is rotatively connected to a first end of the second connecting piece, and a second end of the second connecting piece is rotatively connected to the first end of the second connecting component. Through movement of the first connecting piece and the second connecting piece, the first connecting component may be more precisely limited to move along a set trajectory.

In a possible implementation of the first aspect, the first connecting piece and the second connecting piece are respectively connecting rods.

In a possible implementation of the first aspect, the rotating apparatus further includes a principal axis component, the principal axis component includes a first principal axis extending in the first direction, and the first end of the second connecting component is further rotatively connected to the first principal axis. This can further improve stability of movement of the second connecting component.

In a possible implementation of the first aspect, the first end of the second connecting component includes an arc-shaped arm, the first principal axis includes an arc-shaped groove corresponding to the arc-shaped arm, and the arc-shaped arm is disposed in the arc-shaped groove and is capable of sliding relative to the arc-shaped groove.

In a possible implementation of the first aspect, the principal axis component further includes a second principal axis extending in the first direction, the second principal axis is fastened to the first principal axis, and the first connecting mechanism further includes a second connecting part. The second connecting part includes a third connecting component and a fourth connecting component, and the third connecting component and the fourth connecting component are disposed at intervals with the first connecting component and the second connecting component in the first direction. A first end of the third connecting component is rotatively connected to the second part, and a second end of the third connecting component is rotatively connected to a first end of the fourth connecting component. The first end of the fourth connecting component is further rotatively connected to the second principal axis, and a second end of the fourth connecting component is slidably connected to the first part.

According to this implementation of this application, the first part is rotatively connected to the first connecting component, and is slidably connected to the fourth connecting component; and the second part is slidably connected to the second connecting component, and is rotatively connected to the third connecting component. In this way, it can be ensured that a force applied to the first part is consistent with a force applied to the second part. This can further improve mounting stability of the first part and the second part.

In a possible implementation of the first aspect, in the first direction, a ratio of a distance between the first connecting component and the fourth connecting component to a length of the principal axis component is from 0.1 to 0.5, and a ratio of a distance between the second connecting component and the third connecting component to the length of the principal axis component is from 0.1 to 0.5.

Based on this, it can be ensured that the distance between the first connecting component and the fourth connecting component is moderate, and the distance between the second connecting component and the third connecting component is moderate. In this case, strength of limiting exerted by the rotating apparatus is not weakened due to an excessively long distance, and no mutual interference between the first connecting component and the fourth connecting component, as well as between the second connecting component and the third connecting component is caused due to an excessively short distance.

A second aspect of this application provides a foldable electronic device. The foldable electronic device includes a first part, a second part, and the rotating apparatus in any one of the first aspect and the possible implementations of the first aspect. A weight of the first part is greater than a weight of the second part. The rotating apparatus includes a plurality of connecting mechanisms, and the plurality of connecting mechanisms are connected between the first part and the second part. The plurality of connecting mechanisms include a first connecting mechanism, the first part is rotatively connected to a first end of a first connecting component of the first connecting mechanism, a rotating axis of the first part is parallel to a first direction, and the second part is slidably connected to a second end of a second connecting component of the first connecting mechanism. The first connecting mechanism is closer to a first edge of the foldable electronic device than another connecting mechanism in the first direction. The first edge is located at one end of the foldable electronic device in the first direction. The first connecting mechanism includes a plurality of connecting parts that are disposed at intervals in the first direction, the plurality of connecting parts include a first connecting part, and the first connecting part is closer to the first edge than another connecting part in the first direction.

In this way, strength of limiting exerted by the rotating apparatus on the first part at an edge of the foldable electronic device may be further enhanced, thereby further enhancing drop reliability of the foldable electronic device.

In a possible implementation of the second aspect, the first part includes a first mounting plate, and the first mounting plate is rotatively connected to the first end of the first connecting component of the first connecting mechanism. The second part includes a second mounting plate, and the second mounting plate is slidably connected to the second end of the second connecting component of the first connecting mechanism.

In a possible implementation of the second aspect, the rotating apparatus further includes a second connecting mechanism, the second connecting mechanism is disposed at intervals with the first connecting mechanism in the first direction, and the second connecting mechanism includes a fifth connecting component and a sixth connecting component. A first end of the fifth connecting component is rotatively connected to the second part, a second end of the fifth connecting component is rotatively connected to a first end of the sixth connecting component, and a second end of the sixth connecting component is slidably connected to the first part.

In a possible implementation of the second aspect, the rotating apparatus includes a principal axis component, there are a plurality of the first connecting mechanisms, and the plurality of the first connecting mechanisms are disposed at intervals on the principal axis component in the first direction. This can further improve drop reliability of the foldable electronic device.

In a possible implementation of the second aspect, the plurality of the first connecting mechanisms are symmetrically disposed around a first axis, and the first axis passes through a midpoint of the principal axis component and is perpendicular to the first direction.

The plurality of the first connecting mechanisms are symmetrically disposed around the first axis, so that uniformity of forces exerted on the first part and the second part can be further improved. In this way, strength of limiting exerted by the rotating apparatus on the first part and the second part can be effectively enhanced, and drop reliability of the foldable electronic device can be improved.

In a possible implementation of the second aspect, the foldable electronic device further includes a hinge-penetrating flexible circuit board, the hinge-penetrating flexible circuit board extends from the first part to the second part through the rotating apparatus, and a part that is of the hinge-penetrating flexible circuit board and that is disposed corresponding to the rotating apparatus is located between adjacent two of the connecting mechanisms. This can further reduce a risk of damage to the hinge-penetrating flexible circuit board when the hinge-penetrating flexible circuit board is dropped, and can further improve drop reliability of the foldable electronic device.

### BRIEF DESCRIPTION OF DRAWINGS

FIG. 1A is a three-dimensional diagram of a foldable mobile phone in an unfolded state according to an embodiment of this application;
FIG. 1B is a three-dimensional diagram of a foldable mobile phone in a folded state according to an embodiment of this application;
FIG. 1C is an exploded diagram of a foldable mobile phone in an unfolded state according to an embodiment of this application;
FIG. 2 is a diagram of a structure of an outward-folding rotating apparatus in a foldable mobile phone in some technical solutions;
FIG. 3 is a diagram in which a flexible display in a foldable mobile phone bulges in some technical solutions;
FIG. 4A is a diagram of a structure of a foldable mobile phone according to an embodiment of this application;
FIG. 4B is a partial enlarged view of a foldable mobile phone at an area S2 in FIG. 4A according to an embodiment of this application, where a principal axis component is shown by a dashed line;
FIG. 4C is a three-dimensional diagram of a rotating apparatus in a foldable mobile phone according to an embodiment of this application, where a second mounting plate and a principal axis component are shown by dashed lines;
FIG. 5A is a three-dimensional diagram of a first connecting component and a second connecting component in a first connecting mechanism according to an embodiment of this application;
FIG. 5B is an exploded diagram of a first connecting component and a second connecting component in a first connecting mechanism according to an embodiment of this application;
FIG. 6A is a diagram 1 in which a first end of a second connecting component is rotatively connected to a principal axis according to an embodiment of this application, where a rotating apparatus is in an unfolded state;
FIG. 6B is a diagram 2 in which a first end of a second connecting component is rotatively connected to a principal axis according to an embodiment of this application, where a rotating apparatus is in an outward-folding form;
FIG. 7 is a diagram in which a second connecting component is slidably connected to a second mounting plate according to an embodiment of this application;
FIG. 8A shows an example layout manner 1 of a first connecting mechanism in a foldable mobile phone according to an embodiment of this application;
FIG. 8B is a partial enlarged view of a foldable mobile phone at a rotating apparatus according to FIG. 8A according to an embodiment of this application;
FIG. 9 shows an example layout manner 2 of a first connecting mechanism in a foldable mobile phone according to an embodiment of this application;
FIG. 10 shows an example layout manner 3 of a first connecting mechanism in a foldable mobile phone according to an embodiment of this application;
FIG. 11 shows an example layout manner 4 of a first connecting mechanism in a foldable mobile phone according to an embodiment of this application;
FIG. 12 shows an example structure of a rotating apparatus in a foldable mobile phone according to some other embodiments of this application; and
FIG. 13 shows an example structure of a rotating apparatus in a foldable mobile phone according to some other embodiments of this application.

### DESCRIPTION OF EMBODIMENTS

To make the objectives, technical solutions, and advantages of this application clearer, the following further describes the implementations of this application in detail with reference to the accompanying drawings.

"First" and "second" in embodiments of this application are definitions merely for ease of distinguishing components, and do not have actual meanings.

Embodiments of this application are used to provide a rotating apparatus and a foldable electronic device including the rotating apparatus. The foldable electronic device provided in embodiments of this application includes but is not limited to a foldable electronic device such as a foldable mobile phone, a tablet computer (tablet personal computer), an e-book reader, a laptop computer (laptop computer), a personal digital assistant (personal digital assistant, PDA), a personal computer, a notebook (notebook) computer, an in-vehicle device, and a wearable device (for example, smart glasses).

For ease of description, the following uses an example in which the foldable electronic device is a foldable mobile phone for description. In addition, for ease of description, a state of the foldable mobile phone when the foldable mobile phone is folded is defined as a folded state, and a state of the foldable mobile phone when the foldable mobile phone is unfolded is defined as an unfolded state.

The folded state may include an inward-folding screen form (referred to as an "inward-folding form" below) and an outward-folding screen form (referred to as an "outward-folding form" below). For the inward-folding form, a flexible display is located on an inner side of the foldable mobile phone. In other words, when the foldable mobile phone is in the inward-folding form, a user cannot view a display interface of the flexible display from outside the foldable mobile phone. For the outward-folding form, the flexible display is located on an outer side of the foldable mobile phone. In other words, when the foldable mobile phone is in the outward-folding form, the user can view the display interface of the flexible display from outside the foldable mobile phone.

In addition, the foldable mobile phone may be of a tri-fold structure. The tri-fold structure means that the foldable mobile phone includes three housings and two rotating apparatuses, and two adjacent housings are connected through one rotating apparatus. The two adjacent housings may rotate toward each other in an inward-folding manner or an outward-folding manner, until an included angle between the two adjacent housings is approximately 0°, so that the foldable mobile phone is in the inward-folding form or the outward-folding form. Alternatively, the two adjacent housings may rotate away from each other until an included angle between the two adjacent housings is approximately 180°, so that the foldable mobile phone is in the unfolded state.

Alternatively, in another embodiment, the foldable mobile phone may be of another structure form. For example, the foldable mobile phone may be of a dual-fold structure. To be specific, the foldable mobile phone includes two housings and a rotating apparatus connected between the two housings. The two housings may rotate relative to each other through the rotating apparatus, so that the foldable mobile phone can switch freely between the folded state (for example, the inward-folding form or the outward-folding form) and the unfolded state.

The following describes the foldable electronic device provided in embodiments of this application by using an example in which a foldable mobile phone is of a tri-fold structure, a set of two adjacent housings are folded in an outward-folding manner, and another set of two adjacent housings are folded in an outward-folding manner.

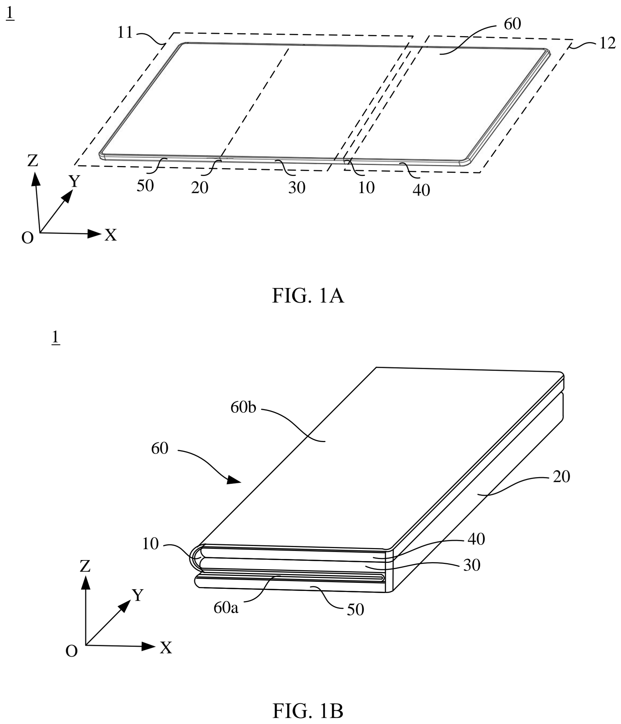

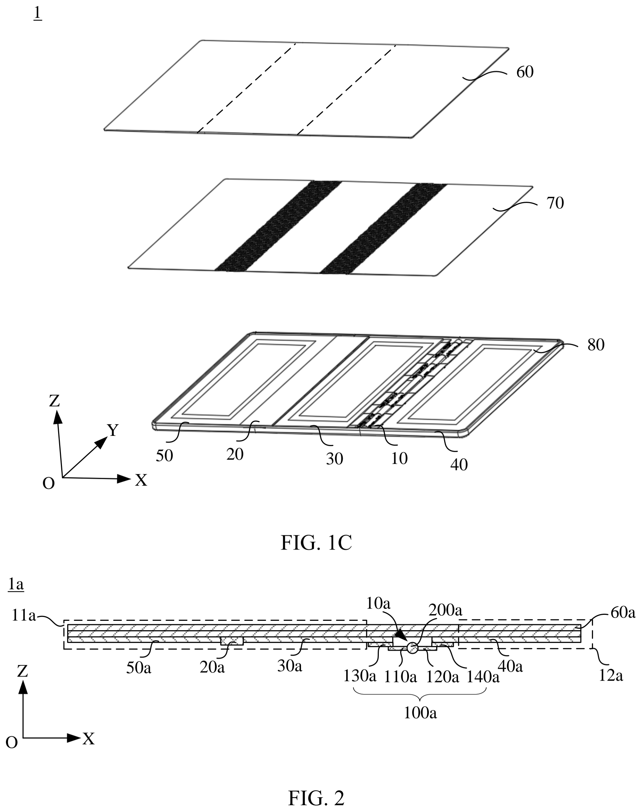

Specifically, FIG. 1A to FIG. 1C are diagrams of structures of a foldable mobile phone 1 according to an embodiment of this application. FIG. 1A is a three-dimensional diagram of the foldable mobile phone 1 in an unfolded state, FIG. 1B is a three-dimensional diagram of the foldable mobile phone 1 in a folded state, and FIG. 1C is an exploded diagram of the foldable mobile phone 1 in the unfolded state.

For ease of subsequent description, before a specific structure of the foldable mobile phone 1 is described, example directions of the foldable mobile phone 1 are first described with reference to FIG. 1A to FIG. 1C. Refer to FIG. 1A to FIG. 1C. An X-axis direction, a Y-axis direction, and a Z-axis direction are defined. As shown in FIG. 1A to FIG. 1C, the X-axis direction is a length direction of the foldable mobile phone 1 in the unfolded state, the Z-axis direction is a thickness direction of the foldable mobile phone 1 in the unfolded state, and the Y-axis direction is a direction perpendicular to both the X-axis direction and the Z-axis direction.

It may be understood that mutual perpendicularity in this application is not absolute perpendicularity, and approximate perpendicularity (for example, an included angle between two structural features is 89.9°) caused by a machining error and an assembly error is also within a range of the mutual perpendicularity in this application. This is not specifically limited in this application. Limitations on being perpendicular to each other are not repeatedly described in the following.

With reference to FIG. 1A to FIG. 1C, the foldable mobile phone 1 includes a rotating apparatus 10, a rotating apparatus 20, a first housing 30, a second housing 40, a third housing 50, a flexible display 60, and a screen bearing plate 70.

The rotating apparatus 10 is connected between the first housing 30 and the second housing 40 in the X-axis direction. The rotating apparatus 20 is connected between the first housing 30 and the third housing 50. The flexible display 60 is fastened to the first housing 30, the second housing 40, and the third housing 50, and covers the rotating apparatus 10, the rotating apparatus 20, the first housing 30, the second housing 40, and the third housing 50. The screen bearing plate 70 may be disposed on an inner surface of the flexible display 60, to provide support for the flexible display 60, and prevent the flexible display 60 from being suspended. For example, the screen bearing plate 70 may be bonded to the first housing 30, the second housing 40, and the third housing 50 through adhesive backing 80.

The first housing 30 and the second housing 40 may rotate relative to each other through the rotating apparatus 10, the first housing 30 and the third housing 50 may rotate relative to each other through the rotating apparatus 20, and the flexible display 60 moves accordingly and presents an unfolded state or a bending state, so that the foldable mobile phone 1 may freely switch between the unfolded state and the folded state.

When the foldable mobile phone 1 is in the unfolded state (for example, an unfolded state shown in FIG. 1A), an included angle between two adjacent housings of the first housing 30, the second housing 40, and the third housing 50 may be approximately 180°. The first housing 30, the second housing 40, and the third housing 50 are arranged in parallel in the X-axis direction, and the flexible display 60 is unfolded in a shape similar to a character "I" and can perform full-screen display, so that the foldable mobile phone 1 has a large display area, to improve watching experience and operation experience of a user.

When the foldable mobile phone 1 is in the folded state (for example, a folded state shown in FIG. 1B), an included angle between two adjacent housings of the first housing 30, the second housing 40, and the third housing 50 may be approximately 0°. The first housing 30, the second housing 40, and the third housing 50 are stacked in the Z-axis direction, and the flexible display 60 is bent accordingly, so that a plane size of the foldable mobile phone 1 is small, making it convenient for the user to carry and store.

A part (for example, a flexible display 60a shown in FIG. 1B) that is of the flexible display 60 and that corresponds to the first housing 30 and the third housing 50 is located on an inner side of the foldable mobile phone 1. A part (for example, a flexible display 60b shown in FIG. 1B) that is of the flexible display 60 and that is disposed corresponding to the second housing 40 is located on an outer side of the foldable mobile phone 1. In other words, the first housing 30 and the second housing 40 are folded in an outward-folding manner. Correspondingly, the rotating apparatus 10 is an outward-folding rotating apparatus. The first housing 30 and the third housing 50 are folded in an inward-folding manner. Correspondingly, the rotating apparatus 20 is an inward-folding rotating apparatus.

Still refer to FIG. 1A. The outward-folding rotating apparatus 10 may divide the foldable mobile phone 1 into a first part 11 and a second part 12 in the X-axis direction, and a weight of the first part 11 is greater than a weight of the second part 12. For example, in this embodiment, the first part 11 includes the first housing 30, the third housing 50, and the rotating apparatus 20 connected between the first housing 30 and the third housing 50. The second part 12 includes the second housing 40.

It may be understood that FIG. 1A merely schematically shows some structural components included in the first part 11 and the second part 12 of the foldable mobile phone 1. Actual structures and locations of these structural components are not limited by FIG. 1A. In addition, the first part 11 and the second part 12 may further have more or fewer structural components than the structural components shown in FIG. 1A. For example, in some other embodiments, the foldable mobile phone 1 is of a dual-fold structure. The first part 11 may include the first housing 30, but may not include the third housing 50 and the rotating apparatus 20. The second part 12 includes the second housing 40.

As described above, in some technical solutions, when the foldable mobile phone in the outward-folding form is dropped in the unfolded state, the first part and/or the second part of the foldable mobile phone are subject to external impact, so that a gap at a joint between the first housing of the first part and the second housing of the second part is reduced. Consequently, the flexible display bulges at the joint between the first housing and the second housing. The following provides detailed descriptions with reference to an example structure of the outward-folding rotating apparatus.

FIG. 2 is a diagram of a structure of an outward-folding rotating apparatus 10a in a foldable mobile phone 1a in some technical solutions. As shown in FIG. 2, the rotating apparatus 10a includes a first connecting mechanism 100a and a principal axis component 200a. The connecting mechanism 100a includes a first connecting component 110a, a second connecting component 120a, a first mounting plate 130a, and a second mounting plate 140a.

An end of the first connecting component 110a is rotatively connected to the principal axis component 200a, the other end of the first connecting component 110a is slidably connected to the first mounting plate 130a, and the first mounting plate 130a is fastened to a first housing 30a of a first part 11a, to implement connection between the rotating apparatus 10a and the first housing 30a. An end of the second connecting component 120a is rotatively connected to the principal axis component 200a, the other end of the second connecting component 120a is slidably connected to an end of the second mounting plate 140a, and the second mounting plate 140a is fastened to a second housing 40a, to implement connection between the rotating apparatus 10a and the second housing 40a of a second part 12a.

The first connecting component 110a is slidably connected to the first mounting plate 130a, and the second connecting component 120a is slidably connected to the second mounting plate 140a, so that limiting exerted by the rotating apparatus 10a on the first housing 30a and the second housing 40a in an X-axis direction is weak. In this case, the first housing 30a and the second housing 40a are prone to generating a relative displacement in the X-axis direction under an external force, causing the flexible display 60a to bulge and causing damage to the flexible display 60a.

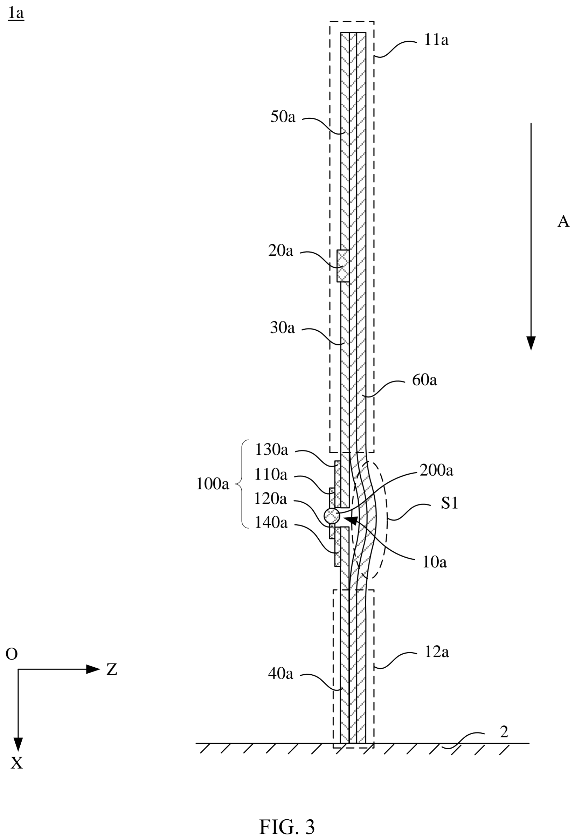

For example, FIG. 3 is a diagram in which a flexible display 60a in a foldable mobile phone 1a bulges in some technical solutions. Refer to FIG. 3. When the foldable mobile phone 1a in the unfolded state is dropped to ground 2 in a positive direction of an X-axis (as shown in a direction A in FIG. 3), under an external force, the first mounting plate 130a slides relative to the first connecting component 110a in the positive direction of the X-axis, and the second mounting plate 140a slides relative to the second connecting component 120a in a negative direction of the X-axis. Because an overall weight of the first part 11a is large, under an action of inertia, the first mounting plate 130a of the first part 11a generates a large relative displacement relative to the first connecting component 110a in the positive direction of the X-axis. In this case, a gap at a joint between the first housing 30a and the second housing 40a is significantly reduced. Consequently, a part (for example, an area S1 shown in FIG. 3) that is of the flexible display 60a and that is disposed corresponding to the rotating apparatus 10a greatly bulges, a local stress of the flexible display 60a increases, and the flexible display 60a is extremely vulnerable to damage.

To resolve the foregoing problem, an embodiment of this application provides an outward-folding rotating apparatus used for a foldable mobile phone. Compared with the outward-folding rotating apparatus 10a, a first connecting component in the outward-folding rotating apparatus provided in this application is rotatively connected to a first part of the foldable mobile phone, so that limiting exerted by the rotating apparatus on a first housing of the first part in an X-axis direction can be further enhanced. This can reduce a displacement generated by the first housing in the X-axis direction under an external force, reduce a risk that a flexible display bulges when the foldable mobile phone is dropped in an unfolded state, and effectively improve drop reliability of the foldable mobile phone in the unfolded state. The following describes the technical solutions of this application with reference to the accompanying drawings.

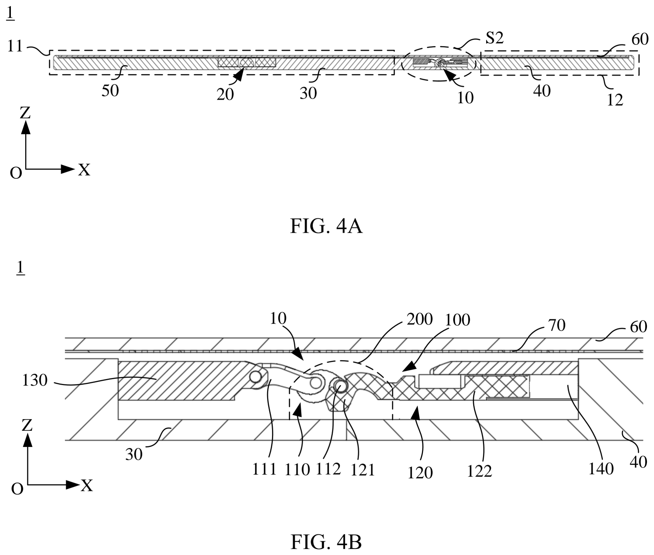

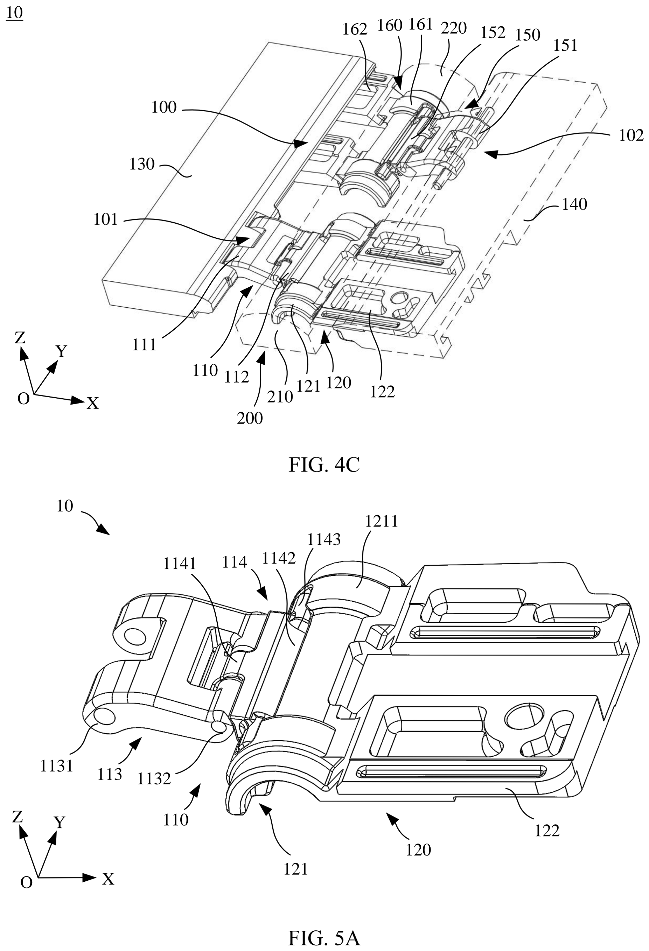

FIG. 4A is a diagram of a structure of a foldable mobile phone 1 according to an embodiment of this application. FIG. 4B is a partial enlarged view of a foldable mobile phone 1 at an area S2 in FIG. 4A according to an embodiment of this application, where a principal axis component 200 is shown by a dashed line. FIG. 4C is a three-dimensional diagram of a rotating apparatus 10 in a foldable mobile phone 1 according to an embodiment of this application, where a second mounting plate 140 and a principal axis component 200 are shown by dashed lines.

With reference to FIG. 4A to FIG. 4C, the foldable mobile phone 1 includes a rotating apparatus 10, a rotating apparatus 20, a first housing 30, a second housing 40, a third housing 50, a flexible display 60, and a screen bearing plate 70.

As described above, in this embodiment of this application, the first housing 30 is rotatively connected to the second housing 40 through the rotating apparatus 10, and the first housing 30 is rotatively connected to the third housing 50 through the rotating apparatus 20. The flexible display 60 and the screen bearing plate 70 are stacked on the rotating apparatus 10, the rotating apparatus 20, the first housing 30, the second housing 40, and the third housing 50 from top to bottom in a Z-axis direction. For functions of the components in the foldable mobile phone 1, refer to the foregoing descriptions. Details are not described herein again. The following mainly describes a structure of the rotating apparatus 10 provided in this embodiment of this application, and a mounting mode between the rotating apparatus 10 and the first housing 30 of a first part 11, and between the rotating apparatus 10 and the second housing 40 of a second part 12.

Still refer to FIG. 4A to FIG. 4C. The rotating apparatus 10 includes a first connecting mechanism 100. The first connecting mechanism 100 includes a first connecting part 101. The first connecting part 101 includes a first connecting component 110 and a second connecting component 120.

A first end 111 of the first connecting component 110 is rotatively connected to the first part 11. A rotating axis of the first part 11 may be parallel to a Y-axis direction (as an example of a first direction). For example, the first part 11 may include a first mounting plate 130. The first end 111 of the first connecting component 110 may be rotatively connected to the first mounting plate 130 of the first part 11, and the first mounting plate 130 is fastened to the first housing 30 of the first part 11.

A second end 112 of the first connecting component 110 is rotatively connected to a first end 121 of the second connecting component 120. A second end 122 of the second connecting component 120 is slidably connected to the second part 12. A sliding direction of the second part 12 may be the X-axis direction. For example, the second part 12 may include a second mounting plate 140. The second end 122 of the second connecting component 120 may be slidably connected to the second mounting plate 140. The second mounting plate 140 is fastened to the second housing 40 of the second part 12.

According to the rotating apparatus 10, the first connecting component 110 is rotatively connected to the first part 11, so that strength of limiting exerted by the rotating apparatus 10 on the first housing 30 in the X-axis direction can be effectively enhanced. In this case, when the foldable mobile phone 1 is dropped in the unfolded state, the first housing 30 does not generate a large displacement due to inertia of the first part 11. This can effectively prevent an obvious change in a gap at a joint between the first housing 30 and the second housing 40, reduce a risk that the flexible display 60 bulges, and effectively improve drop reliability of the foldable mobile phone 1 in the unfolded state.

The following describes specific structures and mounting modes of the components in the first connecting mechanism 100 of the rotating apparatus 10 with reference to the accompanying drawings.

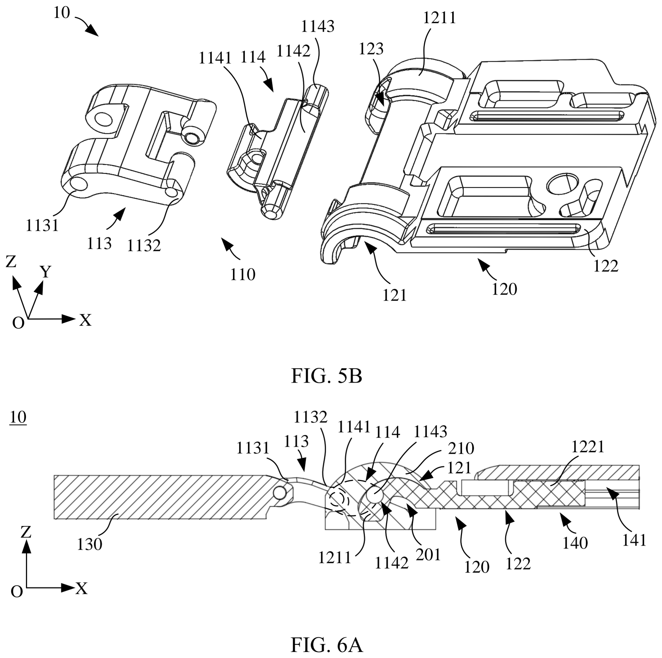

FIG. 5A and FIG. 5B are diagrams of structures of a first connecting component 110 and a second connecting component 120 in a first connecting mechanism 100 according to an embodiment of this application. FIG. 5A is a three-dimensional diagram of the first connecting component 110 and the second connecting component 120, and FIG. 5B is an exploded diagram of the first connecting component 110 and the second connecting component 120. Refer to FIG. 5A and FIG. 5B. With reference to FIG. 4B and FIG. 4C, in some embodiments of this application, the first connecting component 110 includes a first connecting piece 113 and a second connecting piece 114.

A first end 1131 of the first connecting piece 113 is rotatively connected to a first mounting plate 130. A second end 1132 of the first connecting piece 113 is rotatively connected to a first end 1141 of the second connecting piece 114. A second end 1141 of the second connecting piece 114 is rotatively connected to the first end 121 of the second connecting component 120.

It may be understood that the first end 1131 of the first connecting piece 113 shown in FIG. 5A and FIG. 5B is the first end 111 of the first connecting component 110 shown in FIG. 4B and FIG. 4C. The second end 1142 of the second connecting piece 114 shown in FIG. 5A and FIG. 5B is the second end 112 of the first connecting component 110 shown in FIG. 4B and FIG. 4C.

According to the rotating apparatus 10, through movement of the first connecting piece 113 and the second connecting piece 114, the first connecting component 110 may be more precisely limited to move along a set trajectory. This can ensure that the first housing 30 and the second housing 40 in the unfolded state and an outward-folding form can be located at specific positions, thereby preventing the flexible display 60 from being squeezed or pulled, and enabling the foldable mobile phone 1 to be normally unfolded or folded.

In some embodiments of this application, the first connecting piece 113 and the second connecting piece 114 may be respectively connecting rods.

In some embodiments of this application, the first connecting piece 113 may be rotatively connected to the first mounting plate 130 through a pin shaft.

In some embodiments of this application, the second end 1132 of the first connecting piece 113 may be rotatively connected to the first end 1141 of the second connecting piece 114 through a pin shaft.

In some embodiments of this application, the second end 1142 of the second connecting piece 114 may include a mounting part 1143 extending in a Y-axis direction. The first end 121 of the second connecting component 120 may be provided with a mounting cavity 123 adapted to a shape of the mounting part 1143. The mounting part 1143 is disposed in the mounting cavity 123, and may slide along an inner surface of the mounting cavity 123, so that the second connecting piece 114 is rotatively connected to the second connecting component 120.

Still refer to FIG. 4B and FIG. 4C. With reference to FIG. 5A and FIG. 5B, in some embodiments of this application, the rotating apparatus 10 may further include a principal axis component 200. The principal axis component 200 includes a first principal axis 210 extending in the Y-axis direction. A joint between the second connecting piece 114 and the second connecting component 120 may be located inside the first principal axis 210, and the first end 121 of the second connecting component 120 is rotatively connected to the first principal axis 210, so that movement stability of the first connecting mechanism 100 can be further improved, and it is ensured that the first housing 30 and the second housing 40 can rotate more stably.

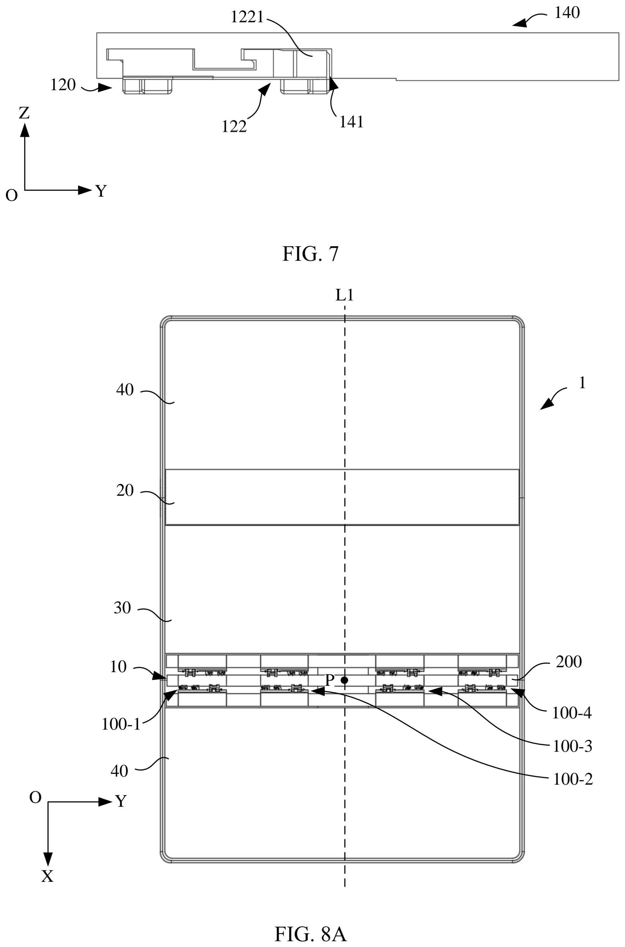

It may be understood that FIG. 4C shows only a partial structure of the principal axis component 200 by the dashed lines, and the dashed lines do not represent an entire length of the principal axis component 200. For example, as shown in FIG. 8A to FIG. 13 below, two ends of the principal axis component 200 may respectively extend to two edges of the foldable mobile phone 1 in the Y-axis direction.

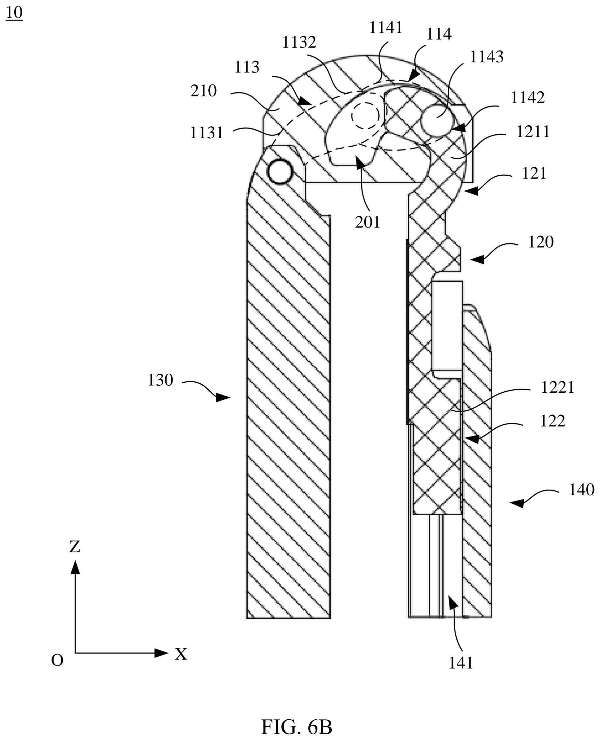

FIG. 6A and FIG. 6B are diagrams in which a first end 121 of a second connecting component 120 is rotatively connected to a first principal axis 210 according to an embodiment of this application. In FIG. 6A, the rotating apparatus 10 is in the unfolded state. In this case, an included angle between the first mounting plate 130 and the second mounting plate 140 is approximately 180°. In FIG. 6B, the rotating apparatus 10 is in the outward-folding form. In this case, an included angle between the first mounting plate 130 and the second mounting plate 140 is approximately 0°.

Refer to FIG. 6A and FIG. 6B. With reference to FIG. 5A and FIG. 5B, the first end 121 of the second connecting component 120 includes an arc-shaped arm 1211. The first principal axis 210 includes an arc-shaped groove 201 adapted to a shape of the arc-shaped arm 1211. The arc-shaped arm 1211 is disposed in the arc-shaped groove 201, and is capable of sliding relative to the arc-shaped groove 201, so that the second connecting component 120 is rotatively connected to the first principal axis 210, and the rotating apparatus 10 can switch freely between the unfolded state (for example, an unfolded state shown in FIG. 6A) and the outward-folding form (for example, an outward-folding form shown in FIG. 6B).

In some embodiments of this application, the arc-shaped arm 1211 may be configured to rotatively connect to the second end 1142 of the second connecting piece 114 (namely, the second end 112 of the first connecting component 110). For example, the mounting cavity 123 may be provided on the arc-shaped arm 1211 of the first end 121, so that the second end 1142 of the second connecting piece 114 is rotatively connected to the arc-shaped arm 1211 through cooperation between the mounting cavity 123 and the mounting part 1143, and the second end 1142 of the second connecting piece 114 is rotatively connected to the first end 121 of the second connecting component 120.

In some embodiments of this application, the second end 122 of the second connecting component 120 may be slidably connected to the second mounting plate 140, to ensure that the first housing 30 and the second housing 40 in the unfolded state and the outward-folding form can be located at specific positions, thereby implementing an unfolding or folding function of the foldable mobile phone 1.

For example, FIG. 7 is a diagram in which a second connecting component 120 is slidably connected to a second mounting plate 140 according to an embodiment of this application. Refer to FIG. 7. With reference to FIG. 6A and FIG. 6B, a sliding block 1221 is disposed on the second end 122 of the second connecting component 120. The second mounting plate 140 is provided with a sliding groove 141 corresponding to the sliding block 1221. The sliding block 1221 is disposed in the sliding groove 141, and is capable of sliding relative to the sliding groove 141 in the X-axis direction (a direction perpendicular to paper in FIG. 7), so that the second end 122 of the second connecting component 120 is slidably connected to the second mounting plate 140.

Alternatively, in another alternative implementation, the second end 122 of the second connecting component 120 may be provided with a sliding groove. A sliding block is disposed on the second mounting plate 140. This is not limited in this application. Any connection manner in which the second end 122 of the second connecting component 120 can be slidably connected to the second mounting plate 140 is within the protection scope of this application.

Still refer to FIG. 4C. With reference to FIG. 4B, in some embodiments of this application, the rotating apparatus 10 may further include a second connecting part 102. The second connecting part 102 is disposed at intervals with the first connecting part 101 in the Y-axis direction, so that mounting stability of the first mounting plate 130 and the second mounting plate 140 can be further improved, thereby improving mounting stability of the first housing 30 and the second housing 40.

Specifically, the second connecting part 102 includes a third connecting component 150 and a fourth connecting component 160. The third connecting component 150 and the fourth connecting component 160 are disposed at intervals with the first connecting component 110 and the second connecting component 120 in the Y-axis direction. A first end 151 of the third connecting component 150 is rotatively connected to the second mounting plate 140. A second end 152 of the third connecting component 150 is rotatively connected to a first end 161 of the fourth connecting component 160.

The principal axis component 200 further includes a second principal axis 220 extending in the Y-axis direction, and the second principal axis 220 is fastened to the first principal axis 210. The first end 161 of the fourth connecting component 160 is further rotatively connected to the second principal axis 220. A second end 162 of the fourth connecting component 160 is slidably connected to the first mounting plate 130.

According to the rotating apparatus 10, the first mounting plate 130 is rotatively connected to the first connecting component 110, and is slidably connected to the fourth connecting component 160. The second mounting plate 140 is slidably connected to the second connecting component 120, and is rotatively connected to the third connecting component 150. In this way, it can be ensured that a force exerted on the first mounting plate 130 is consistent with a force exerted on the second mounting plate 140. This can further improve mounting stability of the first mounting plate 130 and the second mounting plate 140, and further improve mounting stability of the first housing 30 and the second housing 40.

In some embodiments of this application, a structure form of the third connecting component 150 may be the same as the structure form of the first connecting component 110, and a structure form of the fourth connecting component 160 may be the same as the structure form of the second connecting component 120. Correspondingly, a manner in which the third connecting component 150 is rotatively connected to the fourth connecting component 160 may be the same as the manner in which the first connecting component 110 is rotatively connected to the second connecting component 120. For details, refer to FIG. 5A and FIG. 5B, as well as related descriptions thereof. Details are not described herein again.

In addition, a manner in which the third connecting component 150 is rotatively connected to the second mounting plate 140 may be the same as the manner in which the first connecting component 110 is rotatively connected to the first mounting plate 130. A manner in which the fourth connecting component 160 is slidably connected to the first mounting plate 130 may be the same as the manner in which the second connecting component 120 is slidably connected to the second mounting plate 140. A manner in which the fourth connecting component 160 is rotatively connected to the second principal axis 220 may be the same as the manner in which the second connecting component 120 is rotatively connected to the first principal axis 210. For details, refer to FIG. 6A to FIG. 7, as well as related descriptions thereof. Details are not described herein again.

Still refer to FIG. 4C. In some embodiments of this application, in the Y-axis direction, a ratio of a distance between the first connecting component 110 and the fourth connecting component 160 to a length of the principal axis component 200 is from 0.1 to 0.5, for example, 0.1, 0.2, or 0.3. A ratio of a distance between the second connecting component 120 and the third connecting component 150 to the length of the principal axis component 200 is from 0.1 to 0.5, for example, 0.1, 0.2, or 0.3.

Based on this, it can be ensured that the distance between the first connecting component 110 and the fourth connecting component 160 is moderate, and the distance between the second connecting component 120 and the third connecting component 150 is moderate. In this case, mounting stability of the first mounting plate 130 and the second mounting plate 140 in the first connecting mechanism 100 is not weakened due to an excessively long distance, and no mutual interference between the first connecting component 110 and the fourth connecting component 160, as well as between the second connecting component 120 and the third connecting component 150 is caused due to an excessively short distance.

In some embodiments of this application, there may be a plurality of the first connecting mechanisms 100 in the rotating apparatus 10. The plurality of the first connecting mechanisms 100 are disposed at intervals in the Y-axis direction. The first housing 30 is rotatively connected to the second housing 40 through the plurality of the first connecting mechanisms 100, so that limiting exerted by the rotating apparatus 10 on the first housing 30 in the X-axis direction can be effectively enhanced. This can further improve drop reliability of the foldable mobile phone 1.

For example, there may be two, three, or four first connecting mechanisms 100 in the rotating apparatus 10. The following describes several layout solutions of the first connecting mechanism 100 in the foldable mobile phone 1 in detail with reference to the accompanying drawings by using an example in which the rotating apparatus 10 includes four first connecting mechanisms 100.

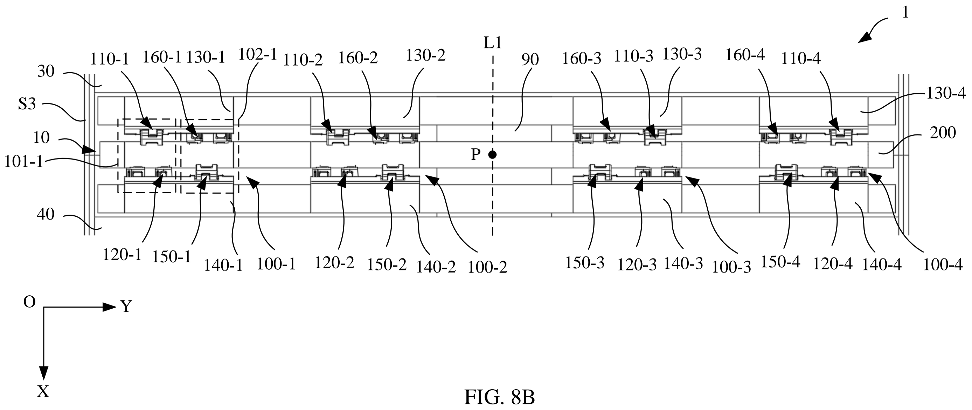

FIG. 8A and FIG. 8B show an example layout manner 1 of a first connecting mechanism 100 in a foldable mobile phone 1 according to an embodiment of this application. FIG. 8A is a top view of the foldable mobile phone 1, and FIG. 8B is a partial enlarged view of the foldable mobile phone 1 at the rotating apparatus 10. Refer to FIG. 8A and FIG. 8B. In some embodiments of this application, the rotating apparatus 10 includes a connecting mechanism 100-1, a connecting mechanism 100-2, a connecting mechanism 100-3, and a connecting mechanism 100-4. The connecting mechanism 100-1, the connecting mechanism 100-2, the connecting mechanism 100-3, and the connecting mechanism 100-4 are disposed at intervals in sequence in the Y-axis direction.

It should be noted that, due to impact of a structure of the flexible display (not shown in the figure), connection strength between an edge of the flexible display and the rotating apparatus 10, the first housing 30, and the second housing 40 is weak and prone to deformation.

Therefore, in some embodiments of this application, in the Y-axis direction, one first connecting mechanism is closer to a first edge S3 of the foldable mobile phone 1 than another connecting mechanism, and a first connecting part in the first connecting mechanism is closer to the first edge S3 of the foldable mobile phone 1 than another connecting part. In this way, strength of limiting exerted by the rotating apparatus 10 on the first housing 30 at an edge of the foldable mobile phone 1 in the X-axis direction can be further enhanced, thereby effectively preventing the flexible display from bulging at the edge of the flexible display due to a displacement generated by the first housing 30 in the X-axis direction.

For example, as shown in FIG. 8B, in the Y-axis direction, the connecting mechanism 100-1 (as an example of the first connecting mechanism) is closer to the first edge S3 of the foldable mobile phone 1 than the connecting mechanism 100-2, the connecting mechanism 100-3, and the connecting mechanism 100-4. In addition, a first connecting part 101-1 of the connecting mechanism 100-1 is closer to the first edge S3 of the foldable mobile phone 1 than a second connecting part 102-1 (as an example of the another connecting part).

It should be noted that the another connecting mechanism herein is a connecting mechanism that is physically independent of the first connecting mechanism. The another connecting part is a connecting part that is in the first connecting mechanism and that is physically independent of the first connecting part.

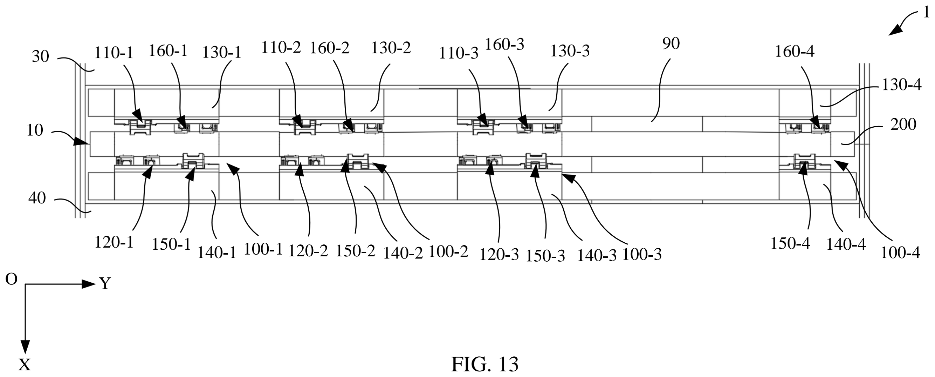

Components included in the another connecting mechanism (for example, the connecting mechanism 100-2, 100-3, or 100-4 shown in FIG. 8B) described in the foregoing embodiments and a connection form between the components are the same as those of the first connecting mechanism (for example, the connecting mechanism 100-1 shown in FIG. 8B). In some other embodiments, the another connecting mechanism may alternatively be in another form (for example, a connecting mechanism 100-4 shown in FIG. 13 below). This is not limited in this application.

Still refer to FIG. 8B. In some embodiments of this application, the connecting mechanism 100-1, the connecting mechanism 100-2, the connecting mechanism 100-3, and the connecting mechanism 100-4 may be symmetrically disposed around a first axis L1. The first axis L1 passes through a midpoint P of the principal axis component 200 and is perpendicular to the Y-axis direction.

It may be understood that, a layout form of components (for example, a first connecting component 110-1, a second connecting component 120-1, a first mounting plate 130-1, a second mounting plate 140-1, a third connecting component 150-1, and a fourth connecting component 160-1) in the connecting mechanism 100-1 is symmetrical to a layout form of components (for example, a first connecting component 110-4, a second connecting component 120-4, a first mounting plate 130-4, a second mounting plate 140-4, a third connecting component 150-4, and a fourth connecting component 160-4) in the connecting mechanism 100-4 around the first axis L1.

In other words, the connecting mechanism 100-1 is mirrored relative to the first axis L1, and a connecting mechanism 100-1 obtained through mirroring completely coincides with the connecting mechanism 100-4.

A layout form of components (for example, a first connecting component 110-2, a second connecting component 120-2, a first mounting plate 130-2, a second mounting plate 140-2, a third connecting component 150-2, and a fourth connecting component 160-2) in the second connecting mechanism 100-2 is symmetrical to a layout form of components (for example, a first connecting component 110-3, a second connecting component 120-3, a first mounting plate 130-3, a second mounting plate 140-3, a third connecting component 150-3, and a fourth connecting component 160-3) in the connecting mechanism 100-3 around the first axis L1.

In other words, the connecting mechanism 100-2 is mirrored relative to the first axis L1, and a connecting mechanism 100-2 obtained through mirroring completely coincides with the connecting mechanism 100-3.

The plurality of the first connecting mechanisms (for example, the connecting mechanism 100-1, the connecting mechanism 100-2, the connecting mechanism 100-3, and the connecting mechanism 100-4) are symmetrically disposed around the first axis L1, so that uniformity of forces exerted on the first housing 30 and the second housing 40 can be further improved. In this way, strength of limiting exerted by the rotating apparatus 10 on the first housing 30 and the second housing 40 can be effectively enhanced, a problem that the flexible display 60 fails due to drop is prevented, and drop reliability of the foldable mobile phone 1 is improved.

It may be understood that FIG. 8A and FIG. 8B merely show an example layout form in which the connecting mechanism 100-1, the connecting mechanism 100-2, the connecting mechanism 100-3, and the connecting mechanism 100-4 are symmetrically disposed. However, this application is not limited thereto. In some other alternative implementations, the connecting mechanism 100-1, the connecting mechanism 100-2, the connecting mechanism 100-3, and the connecting mechanism 100-4 may further have another type of symmetric layout form.

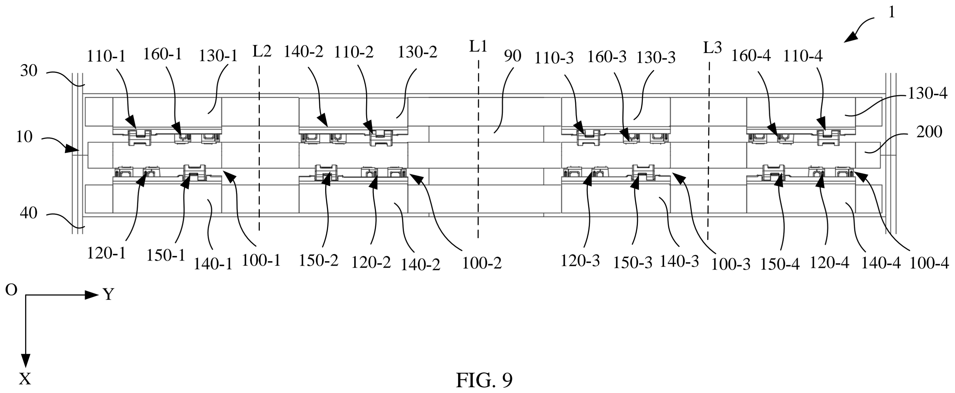

For example, FIG. 9 shows an example layout manner 2 of a first connecting mechanism 100 in a foldable mobile phone 1 according to an embodiment of this application. Refer to FIG. 9. In some other embodiments of this application, the connecting mechanism 100-1 and the connecting mechanism 100-2 are symmetrically disposed around a second axis L2. The connecting mechanism 100-3 and the connecting mechanism 100-4 are symmetrically disposed around a third axis L3. The first axis L1 and the second axis L2 may be symmetrically disposed around the first axis L1, and are respectively perpendicular to the Y-axis direction.

It may be understood that, a layout form of components (for example, a first connecting component 110-1, a second connecting component 120-1, a first mounting plate 130-1, a second mounting plate 140-1, a third connecting component 150-1, and a fourth connecting component 160-1) in the connecting mechanism 100-1 is symmetrical to a layout form of components (for example, a first connecting component 110-2, a second connecting component 120-2, a first mounting plate 130-2, a second mounting plate 140-2, a third connecting component 150-2, and a fourth connecting component 160-2) in the connecting mechanism 100-2 around the second axis L2.

In other words, the connecting mechanism 100-1 is mirrored relative to the second axis L2, and a connecting mechanism 100-1 obtained through mirroring completely coincides with the connecting mechanism 100-2.

A layout form of components (for example, a first connecting component 110-3, a second connecting component 120-3, a first mounting plate 130-3, a second mounting plate 140-3, a third connecting component 150-3, and a fourth connecting component 160-3) in the connecting mechanism 100-3 is symmetrical to a layout form of components (for example, a first connecting component 110-4, a second connecting component 120-4, a first mounting plate 130-4, a second mounting plate 140-4, a third connecting component 150-4, and a fourth connecting component 160-4) in the connecting mechanism 100-4 around the third axis L3.

In other words, the connecting mechanism 100-3 is mirrored relative to the third axis L3, and a connecting mechanism 100-3 obtained through mirroring completely coincides with the connecting mechanism 100-4.

The connecting mechanism 100-1 and the connecting mechanism 100-2 are symmetrically disposed around the second axis L2, and the connecting mechanism 100-3 and the connecting mechanism 100-4 are symmetrically disposed around the third axis L3, so that uniformity of forces exerted on the first housing 30 and the second housing 40 can be further improved. In this way, strength of limiting exerted by the rotating apparatus 10 on the first housing 30 and the second housing 40 can be effectively enhanced, a problem that the flexible display 60 fails due to drop is resolved, and drop reliability of the foldable mobile phone 1 is improved.

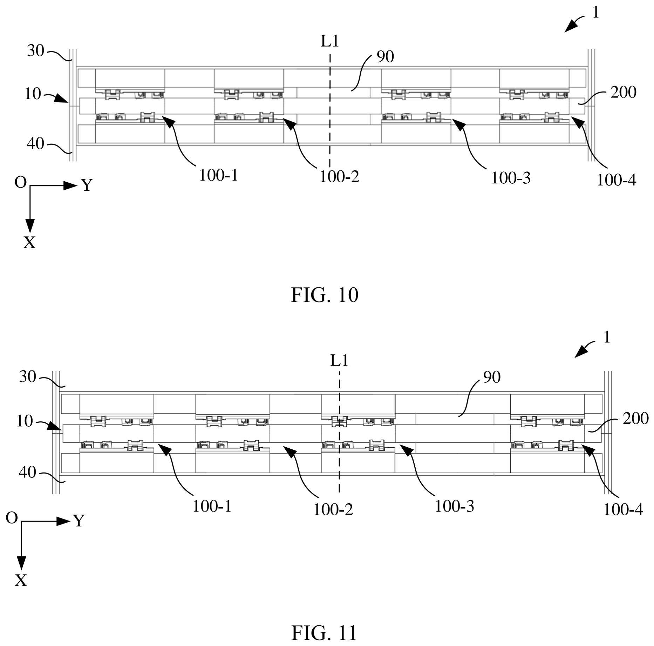

FIG. 10 shows an example layout manner 3 of a first connecting mechanism 100 in a foldable mobile phone 1 according to an embodiment of this application. Refer to FIG. 10. In some embodiments of this application, layout forms of components in the connecting mechanism 100-1, the connecting mechanism 100-2, the connecting mechanism 100-3, and the connecting mechanism 100-4 may be the same. In other words, the connecting mechanism 100-1 is translated for a plurality of times in the Y-axis direction, so that a connecting mechanism 100-1 after the plurality of times of translation may be completely overlapped with the connecting mechanism 100-2, the connecting mechanism 100-3, and the connecting mechanism 100-4 separately.

In this way, a same set of production mold may be used to manufacture the components in the connecting mechanism 100-1, the connecting mechanism 100-2, the connecting mechanism 100-3, and the connecting mechanism 100-4, thereby further reducing production costs.

Still refer to FIG. 10. In some implementations, in the Y-axis direction, a distance between the connecting mechanism 100-1 and the first axis L1 is equal to a distance between the connecting mechanism 100-4 and the first axis L1. A distance between the connecting mechanism 100-2 and the first axis L1 is equal to a distance between the connecting mechanism 100-3 and the first axis L1. In this way, uniformity of forces exerted on the first housing 30 and the second housing 40 can be further improved.

In some other implementations, distances between the first axis L1 and the connecting mechanism 100-1, the connecting mechanism 100-2, the connecting mechanism 100-3, and the connecting mechanism 100-4 may be not completely equal. For example, FIG. 11 shows an example layout manner 4 of a first connecting mechanism 100 in a foldable mobile phone 1 according to an embodiment of this application. Refer to FIG. 11. In the Y-axis direction, the connecting mechanism 100-1 and the connecting mechanism 100-2 are disposed on a left side of the first axis L1, the connecting mechanism 100-3 is disposed at a position corresponding to the first axis L1, and the connecting mechanism 100-4 is disposed on a right side of the first axis L1. Distances between the first axis L1 and the connecting mechanism 100-1, the connecting mechanism 100-2, the connecting mechanism 100-3, and the connecting mechanism 100-4 are all unequal.

It may be understood that the structure forms of the connecting mechanism 100-1, the connecting mechanism 100-2, the connecting mechanism 100-3, and the connecting mechanism 100-4 in the rotating apparatus 10 are merely examples of the technical solutions of this application. A person skilled in the art may make other variations.

For example, in this embodiment, the connecting mechanisms 100-1, 100-2, 100-3, and 100-4 all include first connecting components (for example, first connecting components 110-1, 110-2, 110-3, and 110-4), second connecting components (for example, second connecting components 120-1, 120-2, 120-3, and 120-4), third connecting components (for example, third connecting components 150-1, 150-2, 150-3, and 150-4), and fourth connecting components (for example, fourth connecting components 160-1, 160-2, 160-3, and 160-4). In some other embodiments, any one or more of the connecting mechanisms 100-1, 100-2, 100-3, and 100-4 may alternatively include a first connecting component and a second connecting component, but do not include a third connecting component and a fourth connecting component.

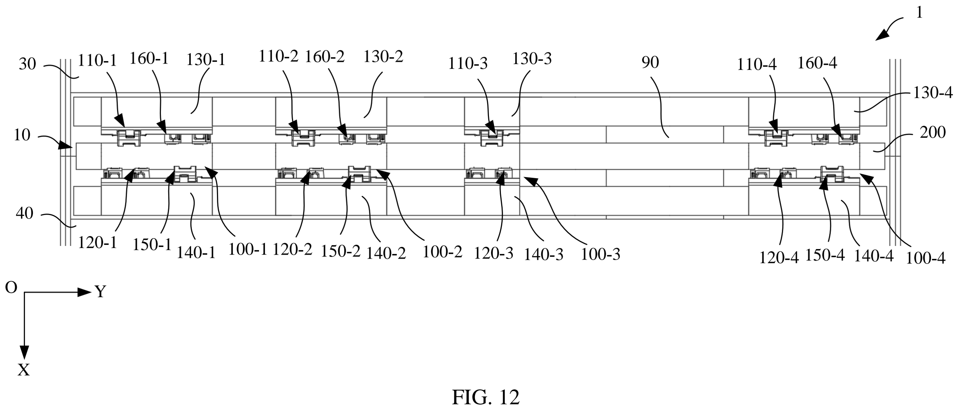

For example, FIG. 12 shows an example structure of a rotating apparatus 10 in a foldable mobile phone 1 according to some other embodiments of this application. Refer to FIG. 12. The rotating apparatus 10 includes a connecting mechanism 100-1, a connecting mechanism 100-2, a connecting mechanism 100-3, and a connecting mechanism 100-4 that are disposed at intervals in sequence in a Y-axis direction.

The connecting mechanism 100-3 includes a first connecting component 110-3 and a second connecting component 120-3. The connecting mechanisms 100-1, 100-2, and 100-4 all include first connecting components (for example, first connecting components 110-1, 110-2, and 110-4), second connecting components (for example, second connecting components 120-1, 120-2, and 120-4), third connecting components (for example, third connecting components 150-1, 150-2, and 150-4), and fourth connecting components (for example, fourth connecting components 160-1, 160-2, and 160-4).

For another example, in some other embodiments, any one or more of the connecting mechanisms 100-1, 100-2, 100-3, and 100-4 may alternatively include a third connecting component and a fourth connecting component, but do not include a first connecting component and a second connecting component.

For example, FIG. 13 shows an example structure of a rotating apparatus 10 in a foldable mobile phone 1 according to some other embodiments of this application. Refer to FIG. 13. The rotating apparatus 10 includes a connecting mechanism 100-1, a connecting mechanism 100-2, a connecting mechanism 100-3, and a connecting mechanism 100-4 that are disposed at intervals in sequence in a Y-axis direction.

The connecting mechanism 100-4 (as an example of the second connecting mechanism) includes a third connecting component 150-4 (as an example of a fifth connecting component) and a fourth connecting component 160-4 (as an example of a sixth connecting component). The third connecting component 150-4 is rotatively connected to a second mounting plate 140-4. The fourth connecting component 160-4 is slidably connected to a first mounting plate 130-4.

The connecting mechanisms 100-1, 100-2, and 100-3 all include first connecting components (for example, first connecting components 110-1, 110-2, and 110-3), second connecting components (for example, second connecting components 120-1, 120-2, and 120-3), third connecting components (for example, third connecting components 150-1, 150-2, and 150-3), and fourth connecting components (for example, fourth connecting components 160-1, 160-2, and 160-3).

It may be understood that the structure forms of the connecting mechanisms in the foregoing embodiments are merely some embodiments of this application. In some other application scenarios, when the rotating apparatus 10 in the foldable mobile phone 1 includes a plurality of connecting mechanisms (for example, the connecting mechanisms 100-1, 100-2, 100-3, and 100-4), structural solutions of the connecting mechanisms may be randomly split or recombined. This is not specifically limited in this application. Any structure form of a connecting mechanism that can improve drop reliability of the foldable mobile phone 1 is within the protection scope of this application.

In addition, it may be understood that, in the foregoing embodiments, the structure form and the mounting mode of the rotating apparatus provided in this application are described only by using an example of the outward-folding rotating apparatus 10 connected between the first housing 30 and the second housing 40.

In some other embodiments, a rotating apparatus 20 connected between the first housing 30 and the third housing 50 may be an outward-folding rotating apparatus. A structure of the outward-folding rotating apparatus 20 is substantially the same as the structure of the outward-folding rotating apparatus 10 connected between the first housing 30 and the second housing 40, with only a mounting direction being changed accordingly. Details are not described herein again.

Still refer to FIG. 8A to FIG. 13. The foldable mobile phone 1 may further include a hinge-penetrating flexible circuit board (flexible circuit board, FPC) 90, referred to as a hinge-penetrating FPC 90 below. The hinge-penetrating FPC 90 passes through the rotating apparatus 10 in the X-axis direction, and two ends of the hinge-penetrating FPC 90 extend to the first housing 30 and the second housing 40 respectively. In this way, electronic components (such as a circuit board and a chip) in the first housing 30 and the second housing 40 are connected, thereby implementing signal transmission.

In some embodiments of this application, the hinge-penetrating FPC 90 may be disposed between two adjacent connecting mechanisms (for example, the connecting mechanism 100-1, the connecting mechanism 100-2, the connecting mechanism 100-3, and the connecting mechanism 100-4), to further reduce a risk of damage to the hinge-penetrating FPC 90 when the hinge-penetrating FPC 90 is dropped, and further improve drop reliability of the foldable mobile phone 1.

For example, as shown in FIG. 8A to FIG. 10, in some implementations, the hinge-penetrating FPC 90 may be located between the connecting mechanism 100-2 and the connecting mechanism 100-3, and is disposed corresponding to the first axis L1.

As shown in FIG. 11 to FIG. 13, in some other implementations, the hinge-penetrating FPC 90 may alternatively be located between the connecting mechanism 100-3 and the connecting mechanism 100-4.

The foregoing describes implementations of this application in specific embodiments, and other advantages and effects of this application may be readily understood by a person skilled in the art from content disclosed in this specification. Although this application is described with reference to some embodiments, it does not mean that a characteristic of this application is limited only to this implementation. On the contrary, a purpose of describing this application with reference to an implementation is to cover another option or modification that may be derived based on claims of this application. This application may be alternatively implemented without using these details. In addition, to avoid confusion or blurring a focus of this application, some specific details are omitted from the description. It should be noted that embodiments in this application and the features in embodiments may be mutually combined in the case of no conflict.

In the descriptions of this application, it should be noted that, directions or position relationships indicated by terms such as "center", "up", "down", "left", "right", "vertical", "horizontal", "outer side", "inner side", "a circumferential direction", "a radical direction", and "an axial direction" are based on the directions or position relationships shown in the accompanying drawings, and are merely intended to describe this application and simplify the descriptions, but are not intended to indicate or imply that an indicated apparatus or element needs to have a specific direction or be constructed and operated in a specific direction, and therefore cannot be understood as a limitation on this application.

In descriptions of this application, it should be noted that unless otherwise explicitly specified and limited, terms such as "dispose", "mount", "connect", and "attach" should be understood in a broad sense. For example, such terms may indicate a fixed connection, a detachable connection, or an integral connection, may indicate a mechanical connection or an electrical connection, and may indicate a direct connection, an indirect connection through an intermediate medium, or an internal communication between two elements. A person of ordinary skill in the art may interpret specific meanings of the foregoing terms in this application according to specific cases.

It is clearly that a person skilled in the art can make various modifications and variations to this application without departing from the spirit and scope of this application. This application is intended to cover these modifications and variations of this application provided that they fall within the scope of protection defined by the claims of this application and their equivalent technologies.

## Claims

1. A rotating apparatus, comprising a first connecting mechanism, wherein the first connecting mechanism comprises a first connecting part, and the first connecting part comprises a first connecting component and a second connecting component, wherein
a first end of the first connecting component is configured to rotatively connect to a first part of a foldable electronic device at which the rotating apparatus is located; and
a second end of the first connecting component is rotatively connected to a first end of the second connecting component, and a second end of the second connecting component is configured to slidably connect to a second part of the foldable electronic device.

2. The rotating apparatus according to claim 1, wherein a rotating axis of the first part is parallel to a first direction, and a sliding direction of the second part is perpendicular to the first direction.

3. The rotating apparatus according to claim 1, wherein the first connecting component comprises a first connecting piece and a second connecting piece, wherein
a first end of the first connecting piece is configured to rotatively connect to the first part, a second end of the first connecting piece is rotatively connected to a first end of the second connecting piece, and a second end of the second connecting piece is rotatively connected to the first end of the second connecting component.

4. The rotating apparatus according to claim 3, wherein the first connecting piece and the second connecting piece are respectively connecting rods.

5. The rotating apparatus according to claim 2, wherein the rotating apparatus further comprises a principal axis component, the principal axis component comprises a first principal axis extending in the first direction, and the first end of the second connecting component is further rotatively connected to the first principal axis.

6. The rotating apparatus according to claim 5, wherein the first end of the second connecting component comprises an arc-shaped arm, the first principal axis comprises an arc-shaped groove corresponding to the arc-shaped arm, and the arc-shaped arm is disposed in the arc-shaped groove and is capable of sliding relative to the arc-shaped groove.

7. The rotating apparatus according to claim 5, wherein the principal axis component further comprises a second principal axis extending in the first direction, the second principal axis is fastened to the first principal axis, the first connecting mechanism further comprises a second connecting part, the second connecting part comprises a third connecting component and a fourth connecting component, and the third connecting component and the fourth connecting component are disposed at intervals with the first connecting component and the second connecting component in the first direction, wherein
a first end of the third connecting component is configured to rotatively connect to the second part, and a second end of the third connecting component is rotatively connected to a first end of the fourth connecting component; and
the first end of the fourth connecting component is further rotatively connected to the second principal axis, and a second end of the fourth connecting component is configured to slidably connect to the first part.

8. A foldable electronic device, comprising a first part, a second part, and the rotating apparatus according to any one of claims 1 to 7, wherein
a weight of the first part is greater than a weight of the second part, the rotating apparatus comprises a plurality of connecting mechanisms, and the plurality of connecting mechanisms are connected between the first part and the second part, wherein the plurality of connecting mechanisms comprise a first connecting mechanism, the first part is rotatively connected to a first end of a first connecting component of the first connecting mechanism, a rotating axis of the first part is parallel to a first direction, and the second part is slidably connected to a second end of a second connecting component of the first connecting mechanism, wherein the first connecting mechanism is closer to a first edge of the foldable electronic device than another connecting mechanism in the first direction, and the first edge is located at one end of the foldable electronic device in the first direction; and
the first connecting mechanism comprises a plurality of connecting parts that are disposed at intervals in the first direction, the plurality of connecting parts comprise a first connecting part, and the first connecting part is closer to the first edge than another connecting part in the first direction.

9. The foldable electronic device according to claim 8, wherein the first part comprises a first mounting plate, and the first mounting plate is rotatively connected to the first end of the first connecting component of the first connecting mechanism; and
the second part comprises a second mounting plate, and the second mounting plate is slidably connected to the second end of the second connecting component of the first connecting mechanism.

10. The foldable electronic device according to claim 8, wherein the rotating apparatus further comprises a second connecting mechanism, the second connecting mechanism is disposed at intervals with the first connecting mechanism in the first direction, and the second connecting mechanism comprises a fifth connecting component and a sixth connecting component, wherein
a first end of the fifth connecting component is rotatively connected to the second part, a second end of the fifth connecting component is rotatively connected to a first end of the sixth connecting component, and a second end of the sixth connecting component is slidably connected to the first part.

11. The foldable electronic device according to claim 8, wherein the rotating apparatus comprises a principal axis component, there are a plurality of the first connecting mechanisms, and the plurality of the first connecting mechanisms are disposed at intervals on the principal axis component in the first direction.

12. The foldable electronic device according to claim 11, wherein the plurality of the first connecting mechanisms are symmetrically disposed around a first axis, and the first axis passes through a midpoint of the principal axis component and is perpendicular to the first direction.

13. The foldable electronic device according to claim 12, wherein the foldable electronic device further comprises a hinge-penetrating flexible circuit board, the hinge-penetrating flexible circuit board extends from the first part to the second part through the rotating apparatus, and a part that is of the hinge-penetrating flexible circuit board and that is disposed corresponding to the rotating apparatus is located between two adjacent connecting mechanisms.
